# EUROPEAN PATENT APPLICATION

(11) **EP 4 368 341 A1**
(43) Date of publication of application: **15.05.2024**
(21) Application number: 21949294.9
(22) Date of filing: 07.07.2021
(51) Int. Cl.: B24B 53/085

(54) **DRESSING DEVICE, GEAR GRINDING DEVICE, AND METHOD FOR DRESSING GRINDSTONE**

(71) Applicant: Nidec Machine Tool Corporation, Ritto-shi, Shiga 520-3080 (JP)
(72) Inventor: YANASE, Yoshikoto, Ritto-shi, Shiga 520-3080 (JP); IIYAMA, Naoki, Ritto-shi, Shiga 520-3080 (JP); HAYASHI, Ryuzo, Ritto-shi, Shiga 520-3080 (JP)
(74) Representative: Viering, Jentschura & Partner mbB Patent- und Rechtsanwälte
(86) International application number: PCT/JP2021/025616
(87) International publication number: WO 2023/281660

(57) **Abstract**

The dressing device includes a dressing mechanism capable of dressing a thread of grinding wheel with respect to a grinding wheel including the spirally continuous thread of grinding wheel, and a control unit that controls an operation of the dressing mechanism. The control unit rotates the grinding wheel around the grinding wheel rotation axis and rotates the dressing tool around the tool rotation axis to dress the two grinding surfaces adjacent in the groove width direction with the pair of dressing surfaces, and turns the dressing tool around the tool turning axis by the tool swivel unit to thereby change an angle of the pair of dressing surfaces with respect to the two grinding surfaces.

## Description

### TECHNICAL FIELD

The present invention relates to a dressing device, a gear grinding machine, and a dressing method for a grinding wheel.

### BACKGROUND ART

A gear is required to have high machining accuracy depending on its intended use. A gear that is required to have high machining accuracy is manufactured by grinding a rough machined workpiece with a grinding wheel for finish machining. As a gear to be manufactured, for example, there is a helical gear formed in a spiral shape such that teeth are inclined with respect to a central axis. Furthermore, as a gear processing method, crowning processing may be performed on a tooth surface such that a center of the tooth in a tooth trace direction bulges. In a case where the tooth of the helical gear is subjected to the crowning processing, since the tooth is formed in a spiral shape, a pressure angle of the tooth surface changes in the tooth trace direction, so that the tooth surface is twisted. In order to manufacture a gear in which the degree of twist (bias amount) of the tooth surface is appropriately adjusted, for example, a grinding wheel in which the pressure angle changes in the tooth trace direction is used.

For example, Patent Literature 1 discloses a configuration of a dressing device that performs dressing of a screw-shaped grinding wheel. The screw-shaped grinding wheel includes a thread of grinding wheel that is continuous in a spiral shape and grinds a teeth of a gear. In the dressing device, a screw-shaped grinding wheel which is a processing target of dressing and a dressing tool are relatively moved and brought into contact with each other in a state where the screw-shaped grinding wheel and the dressing tool are rotated relative to each other. In the configuration disclosed in Patent Literature 1, at least one of the screw-shaped grinding wheel and the dressing tool is moved at a constant speed in the axial direction and a rotational speed of the screw-shaped grinding wheel is changed, for example, so that dressing in which the pressure angle changes in the tooth trace direction is applied to the thread of grinding wheel of the screw-shaped grinding wheel.

### CITATIONS LIST

### PATENT LITERATURE

Patent Literature 1: JP 5984615 B2

### SUMMARY OF INVENTION

### TECHNICAL PROBLEMS

Meanwhile, the dressing in the dressing device as described above needs to be performed on two grinding surfaces adjacent in a groove width direction in the thread of grinding wheel of the screw-shaped grinding wheel. In the case of a thread of grinding wheel having a complicated shape in which the pressure angle changes in the tooth trace direction, it is difficult to perform dressing so as to simultaneously change the pressure angle with respect to two grinding surfaces adjacent in the groove width direction. Therefore, there is a method in which a dressing tool is separately applied to the grinding surface on the first side and the grinding surface on the second side in the groove width direction of the thread of grinding wheel, and dressing is performed for each grinding surface. However, in such a method, the dressing takes time and effort, and improvement is desired in terms of work efficiency.

The present invention provides a dressing device, a gear grinding machine, and a dressing method for a grinding wheel capable of efficiently performing dressing in a short time even in a grinding wheel including a grinding surface having a complicated shape.

### SOLUTION TO PROBLEMS

In order to solve the above problems, a dressing device according to the present disclosure includes: a dressing mechanism that is relatively movable in a first direction orthogonal to a grinding wheel rotation axis and is capable of dressing a thread of grinding wheel, with respect to a grinding wheel including the thread of grinding wheel spirally continuous around the grinding wheel rotation axis; and a control unit that controls an operation of the dressing mechanism, in which the dressing mechanism includes: a disk-shaped dressing tool that is rotationally driven around a tool rotation axis extending along the grinding wheel rotation axis and includes, at a distal end, a pair of dressing surfaces capable of dressing with respect to two grinding surfaces that are surfaces constituting the thread of grinding wheel and adjacent in a groove width direction; and a tool swivel unit that turns the dressing tool around a tool turning axis orthogonal to the tool rotation axis and the first direction, and the control unit rotates the grinding wheel around the grinding wheel rotation axis and rotates the dressing tool around the tool rotation axis to dress the two grinding surfaces adjacent in the groove width direction with the pair of dressing surfaces, and turns the dressing tool around the tool turning axis by the tool swivel unit to thereby change an angle of the pair of dressing surfaces with respect to the two grinding surfaces.

A gear grinding machine according to the present disclosure includes: a workpiece table that rotatably supports a workpiece serving as a gear; a grinding wheel that grinds the workpiece; a grinding wheel support that rotationally drives the grinding wheel around the grinding wheel rotation axis; and the dressing device as described above.

A dressing method for a grinding wheel according to the present disclosure is a dressing method for a grinding wheel in the dressing device as described above, the dressing method including the steps of: rotating the grinding wheel around the grinding wheel rotation axis; rotationally driving the dressing tool around the tool rotation axis; and dressing the two grinding surfaces adjacent in the groove width direction with the pair of dressing surfaces, and turning the dressing tool around the tool turning axis by the tool swivel unit to thereby change an angle of the pair of dressing surfaces with respect to the two grinding surfaces.

### ADVANTAGEOUS EFFECTS OF INVENTION

According to the dressing device, the gear grinding machine, and the dressing method for a grinding wheel of the present disclosure, dressing can be efficiently performed in a short time even in a grinding wheel including a grinding surface having a complicated shape.

### BRIEF DESCRIPTION OF DRAWINGS

FIG. 1 is an elevation view illustrating a configuration of a gear grinding machine according to an embodiment of the present disclosure.
FIG. 2 is a plan view of the gear grinding machine according to the embodiment of the present disclosure.
FIG. 3 is a perspective view illustrating a state of grinding a gear with a grinding wheel of the gear grinding machine according to the embodiment of the present disclosure.
FIG. 4 is a perspective view illustrating a tooth surface shape of one tooth of the gear according to the embodiment of the present disclosure.
FIG. 5 is a diagram illustrating a pressure angle distribution on a tooth surface twisted in one tooth of the gear according to the embodiment of the present disclosure.
FIG. 6 is an elevation view illustrating a state in which a grinding wheel is dressed with a dressing tool in a dressing device of the gear grinding machine according to the embodiment of the present disclosure.
FIG. 7 is a plan cross-sectional view illustrating a state in which a dressing tool is brought into contact with a thread of grinding wheel of a grinding wheel in a dressing device according to a first embodiment of the present disclosure.
FIG. 8 is a plan cross-sectional view illustrating a state in which the dressing tool is turned and brought into contact with the thread of grinding wheel of the grinding wheel in the dressing device according to the first embodiment of the present disclosure.
FIG. 9 is a plan cross-sectional view illustrating a state in which the dressing tool is brought into contact with the thread of grinding wheel of the grinding wheel by being turned in a direction different from that in FIG. 8 in the dressing device according to the first embodiment of the present disclosure.
FIG. 10 is a diagram illustrating a hardware configuration of a control unit according to the embodiment of the present disclosure.
FIG. 11 is a functional block diagram of the control unit in the embodiment of the present disclosure.
FIG. 12 is a flowchart illustrating a procedure of a dressing method for a grinding wheel according to an embodiment of the present disclosure.
FIG. 13 is a plan cross-sectional view illustrating a dressing tool in a modification of the first embodiment of the present disclosure.
FIG. 14 is a plan cross-sectional view illustrating a state in which a dressing tool is brought into contact with a thread of grinding wheel of a grinding wheel in a dressing device according to a second embodiment of the present disclosure.

### DESCRIPTION OF EMBODIMENTS

### (First embodiment)

Hereinafter, modes for carrying out a dressing device, a gear grinding machine, and a dressing method for a grinding wheel according to the present disclosure will be described with reference to the accompanying drawings. However, the present disclosure is not limited only to these embodiments.

### (Configuration of gear grinding machine)

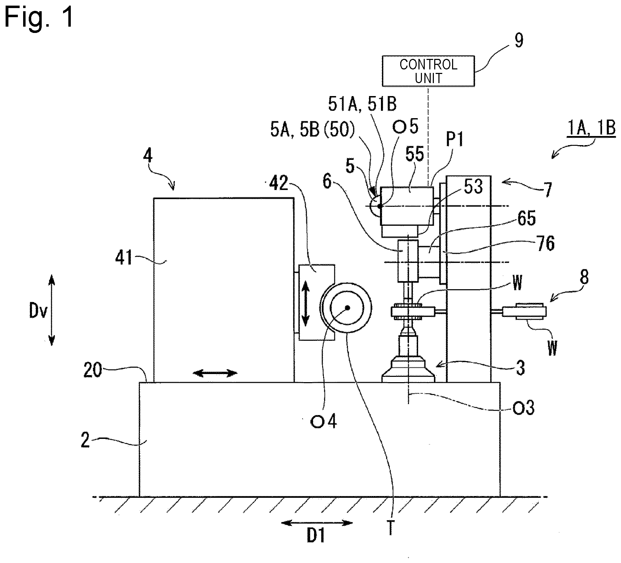

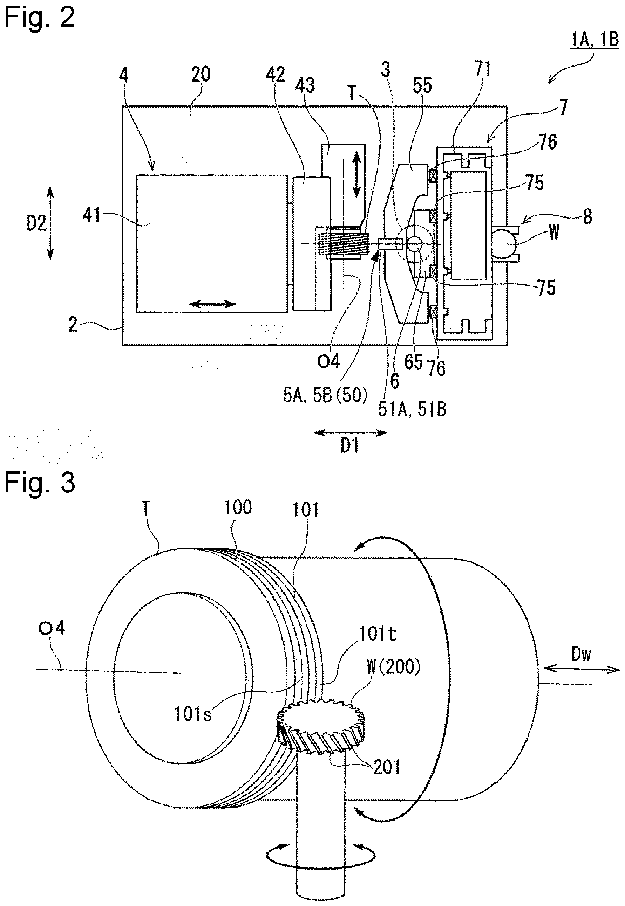

A gear grinding machine 1A illustrated in FIGS. 1 and 2 can grind a workpiece W to be a gear 200 with a grinding wheel T. In the gear grinding machine 1A, the grinding wheel T and the workpiece W are brought into contact with each other while being synchronously rotated, whereby the workpiece W is ground. The workpiece W is, for example, a member to be machined formed in a disk shape or a cylindrical shape. The workpiece W forms teeth 201 formed on an outer peripheral surface by the grinding wheel T.

As illustrated in FIG. 3, the grinding wheel T is formed in a cylindrical shape centered on a grinding wheel rotation axis O4. A thread of grinding wheel 101 corresponding to a desired gear tooth shape is formed on the outer peripheral surface of the grinding wheel T. The thread of grinding wheel 101 is formed so as to continue spirally around the grinding wheel rotation axis O4 with respect to the outer peripheral surface of the grinding wheel T. The thread of grinding wheel 101 is formed so as to be sandwiched between grinding teeth 100 which are protrusions. The thread of grinding wheel 101 includes two grinding surfaces 101A and 101B (a first grinding surface 101A and a second grinding surface 101B) adjacent to each other in a groove width direction Dw in which the grinding wheel rotation axis O4 extends. The two grinding surfaces 101A and 101B face each other in the groove width direction Dw. That is, the two grinding surfaces 101A and 101B are surfaces inside one thread of grinding wheel 101. The two grinding surfaces 101A and 101B are surfaces that come into contact with a workpiece W when the workpiece W is machined by the grinding wheel T, and are surfaces that form the teeth 201 of the gear 200 after the workpiece W is scraped.

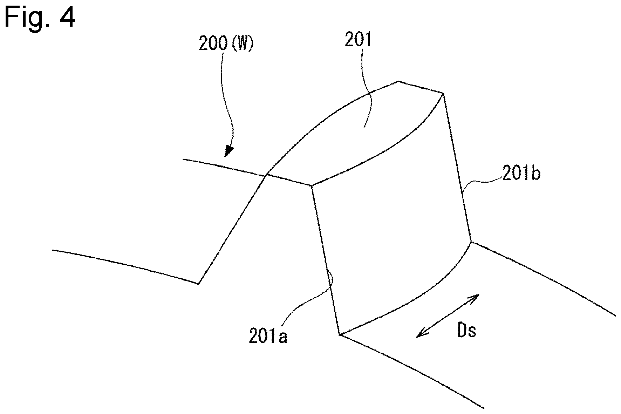

In the present embodiment, the gear 200 manufactured by grinding the workpiece W with the grinding wheel T is, for example, a helical gear in which the teeth 201 are formed in a spiral shape so as to be oblique to a central axis of the gear 200. As illustrated in FIG. 4, in the present embodiment, the tooth 201 of the gear 200 to be manufactured is subjected to crowning processing so that a tooth surface bulges between a first end 201a on one side (first side) in a tooth trace direction Ds and a second end 201b on the other side (second side) in the tooth trace direction Ds. Here, the tooth trace direction Ds is a direction orthogonal to a direction in which the teeth 201 arranged apart from each other are arranged, and is a direction in which the tooth surface extends including a direction in which a central axis of the gear extends. That is, the tooth trace direction Ds is a direction in which an imaginary line connecting the first end 201a and the second end 201b extends. Furthermore, in the case of a helical gear, the tooth trace direction Ds is a direction extending spirally with respect to the central axis of the gear 200. As illustrated in FIG. 3, in the grinding wheel T, when one tooth 201 of the gear 200 is ground, the grinding wheel T is rotated around the grinding wheel rotation axis O4, and the thread of grinding wheel 101 is pressed against a region to be the tooth 201 in the workpiece W. When the grinding wheel T is rotated while grinding the tooth 201 in the thread of grinding wheel 101 after a first portion 101s of the thread of grinding wheel 101 abuts on the first end 201a on one side in the tooth trace direction Ds of the tooth 201 in a direction in which the thread of grinding wheel 101 extends, a second portion 101t of the thread of grinding wheel 101 abuts on the second end 201b on the other side in the tooth trace direction Ds of the tooth 201. That is, one tooth 201 is ground continuously from the first end 201a to the second end 201b using a continuous region from the first portion 101s to the second portion 101t of the thread of grinding wheel 101.

In the thread of grinding wheel 101, the first portion 101s and the second portion 101t are regions at different positions in the direction in which the thread of grinding wheel 101 extends and the direction in which the grinding wheel rotation axis O4 extends. For example, in a case where the grinding wheel T is a single-start grinding wheel, when the grinding wheel T is viewed from a direction orthogonal to the grinding wheel rotation axis O4, the first portion 101s and the second portion 101t are adjacent positions in the direction in which the grinding wheel rotation axis O4 extends (a position of a start point and a position of an end point where the thread of grinding wheel 101 makes one turn). Furthermore, in a case where the grinding wheel T is a double-start grinding wheel, when the grinding wheel T is viewed from a direction orthogonal to the grinding wheel rotation axis O4, the first portion 101s and the second portion 101t are separated positions (a position of a start point and a position of an end point where the thread of grinding wheel 101 makes one turn) so as to sandwich one thread of grinding wheel 101 in the direction in which the grinding wheel rotation axis O4 extends. Therefore, the positions of the first portion 101s and the second portion 101t illustrated in FIG. 3 are merely an example, and can be appropriately changed according to the shape of the gear 200 to be manufactured.

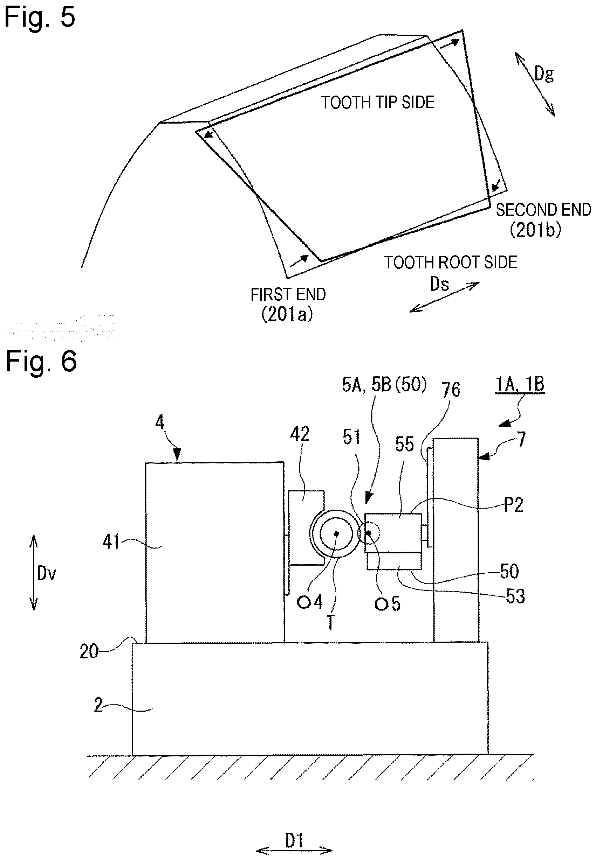

As illustrated in FIG. 5, in a case where the gear 200 is a helical gear, when the tooth surface of the tooth 201 is subjected to crowning processing, a tooth profile twist, so-called bias, may occur. The twist (bias) of the tooth profile means that, between a tooth root and a tooth tip in a tooth profile direction Dg, an inclination direction (increasing and decreasing direction) of an angle of the tooth surface is different (reversed) between the first end 201a on one side and the second end 201b on the other side in the tooth trace direction Ds. In the present embodiment, in order to suppress the degree of twist (bias amount) of the tooth surface, the thread of grinding wheel 101 of the grinding wheel T for grinding the tooth 201 is formed such that the pressure angle changes along the tooth trace direction Ds.

As illustrated in FIGS. 1 and 2, the gear grinding machine 1A includes a bed 2, a workpiece table 3, a grinding wheel support 4, a dressing device 5A, a tail stock 6, a tail stock support 7, a dressing device moving unit 55, a tail stock moving unit 65, and a control unit 9.

As illustrated in FIG. 1, the bed 2 is a pedestal installed on a floor surface. The workpiece table 3, the grinding wheel support 4, and the tail stock support 7 are attached to the bed 2.

The workpiece table 3 rotatably supports the workpiece W on the bed 2. The workpiece table 3 is attached to the bed 2 at a position where the workpiece W can face the grinding wheel T. The workpiece table 3 is rotatable with respect to the bed 2 about a table axis O3 extending in a vertical direction Dv.

The grinding wheel support 4 rotationally drives the grinding wheel T for grinding the workpiece W around the grinding wheel rotation axis O4. The grinding wheel support 4 movably supports the grinding wheel T with respect to the workpiece table 3 on the bed 2. As illustrated in FIG. 2, the grinding wheel support 4 includes a grinding wheel support body 41, a grinding wheel moving unit 42, and a grinding wheel drive unit 43.

The grinding wheel support body 41 is disposed on the bed 2 away from the workpiece table 3. The grinding wheel support body 41 can move the grinding wheel T in a horizontal direction with respect to the workpiece table 3. Here, the moving direction of the grinding wheel support body 41 with respect to the bed 2 is referred to as a first direction D1. The first direction D1 is one of the horizontal directions and is a longitudinal direction of the bed 2. Therefore, the grinding wheel support body 41 adjusts a position of the grinding wheel T in the first direction D1 with respect to the workpiece table 3.

As illustrated in FIG. 1, the grinding wheel moving unit 42 is movable in the vertical direction Dv with respect to the grinding wheel support body 41. Therefore, the grinding wheel moving unit 42 adjusts a position of the grinding wheel T in the vertical direction Dv with respect to the workpiece table 3.

As illustrated in FIG. 2, the grinding wheel drive unit 43 is movable in a horizontal direction (referred to as a second direction D2) orthogonal to the first direction D1 with respect to the grinding wheel moving unit 42. The second direction D2 is a direction orthogonal to the first direction D1 and the vertical direction Dv, and is a width direction of the bed 2. The grinding wheel T is detachably attached to the grinding wheel drive unit 43. The grinding wheel drive unit 43 moves the grinding wheel T while rotating the grinding wheel T about the grinding wheel rotation axis O4 extending in a direction intersecting the first direction D1 by power of a driving source such as a motor. Therefore, the grinding wheel drive unit 43 adjusts a position of the grinding wheel T in the second direction D2 with respect to the workpiece table 3 while rotating the grinding wheel T.

As illustrated in FIGS. 1 and 2, the dressing device 5A includes a dressing mechanism 50 capable of dressing the grinding wheel T, and a part of the control unit 9. The dressing mechanism 50 is supported by the tail stock support 7 so as to be movable in the vertical direction Dv via the dressing device moving unit 55. The dressing mechanism 50 will be described later.

The tail stock support 7 movably supports the tail stock 6 and the dressing mechanism 50 in the vertical direction Dv. The tail stock support 7 is disposed at a position away from the grinding wheel support 4 in the first direction D1 across the workpiece table 3.

The tail stock 6 presses the workpiece W supported on the workpiece table 3 from above in the vertical direction Dv toward the workpiece table 3.

The tail stock support 7 includes a support body 71, a first guide rail 75, and a second guide rail 76. The support body 71 is fixed to the bed 2. The support body 71 has a gate shape in which a conveyance path through which the workpiece W can pass is formed. The first guide rail 75 and the second guide rail 76 are fixed to a surface of the support body 71 facing the grinding wheel support 4.

The first guide rail 75 is fixed to the support body 71. The first guide rail 75 extends linearly in the vertical direction Dv. A pair of the first guide rails 75 is disposed away from the support body 71 in the second direction D2.

The second guide rail 76 is fixed to the support body 71. The second guide rail 76 extends linearly in the vertical direction Dv. A pair of the second guide rails 76 is disposed away from the support body 71 in the second direction D2. The pair of second guide rails 76 is disposed so as to sandwich the pair of first guide rails 75 inside in the second direction D2.

The tail stock moving unit 65 movably supports the tail stock 6 toward the workpiece table 3. The tail stock moving unit 65 is movably supported by the first guide rail 75. The tail stock 6 is fixed to the tail stock moving unit 65. The tail stock moving unit 65 is moved with respect to the first guide rail 75 by a driving device such as a motor (not illustrated). That is, the tail stock moving unit 65 moves the tail stock 6 only in the vertical direction Dv with respect to the tail stock support 7 along the first guide rail 75.

The workpiece turning conveyance unit 8 turns the workpiece W around a workpiece turning axis between a workpiece machining position and a workpiece exchange position to move the workpiece W. Here, the workpiece machining position is a position where the workpiece W can be installed on the workpiece table 3. Therefore, at the workpiece machining position, the workpiece W is ground by the grinding wheel T. Furthermore, the workpiece exchange position is a position where the workpiece W that has been machined can be exchanged for an unmachined workpiece W. The workpiece exchange position is a position opposite to the grinding wheel support 4 with the tail stock support 7 interposed therebetween. That is, the workpiece exchange position is located at the same position in the vertical direction Dv and the second direction D2 with respect to the workpiece machining position, and is located away from the workpiece machining position in the first direction D1. At the time of exchange, the workpiece turning conveyance unit 8 moves the workpiece W located at the workpiece machining position and the workpiece W located at the workpiece exchange position to each other. Note that the workpiece turning conveyance unit 8 moves the workpiece W to a position at which grinding or the like of the workpiece W by the grinding wheel T is not hindered except when the workpiece W is exchanged.

As illustrated in FIGS. 1 and 6, the dressing device moving unit 55 supports the dressing mechanism 50 so as to be movable in the first direction D1. The dressing device moving unit 55 is supported by the second guide rail 76 so as to be movable in the vertical direction Dv. The dressing device moving unit 55 linearly moves the dressing mechanism 50 between a dressing device standby position P1 (see FIG. 1) and a dressing device use position P2 (see FIG. 6). The dressing device use position P2 is a position where the grinding wheel T can be dressed. That is, the dressing device use position P2 is a position where the dressing tool 51A comes into contact with the grinding wheel T. The dressing device standby position P1 is above the dressing device use position P2 in the vertical direction Dv, and is a position where the dressing tool 51A cannot contact the grinding wheel T.

Furthermore, the dressing device moving unit 55 does not interfere with the tail stock moving unit 65 when viewed from above in the vertical direction Dv. Therefore, when the dressing device moving unit 55 and the tail stock moving unit 65 move in the vertical direction Dv, they do not interfere with each other. The dressing device moving unit 55 is moved with respect to the second guide rail 76 by a driving device such as a motor (not illustrated).

When viewed from above in the vertical direction Dv, the dressing device 5A is disposed at a position closer to the grinding wheel support 4 than the tail stock 6.

### (Dressing mechanism)

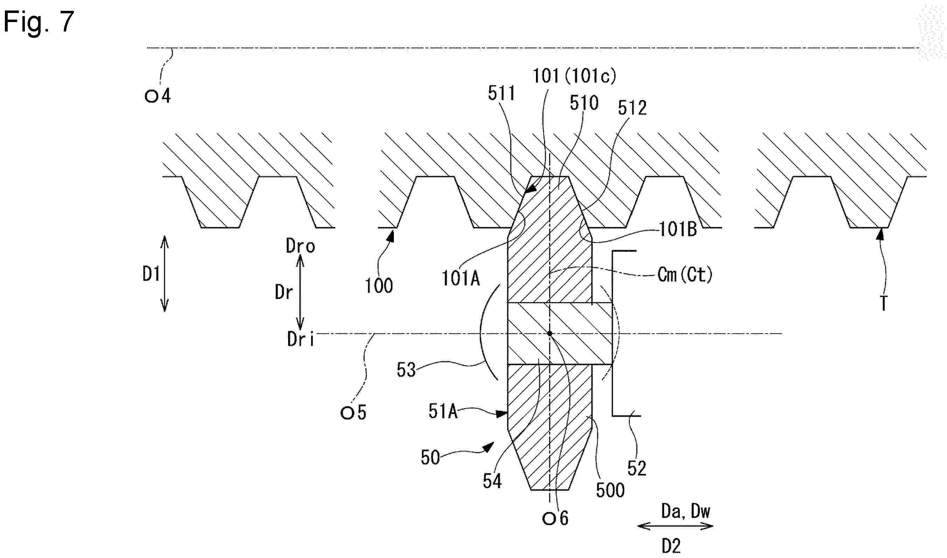

Since the grinding wheel support body 41 can move the grinding wheel T in the horizontal direction with respect to the workpiece table 3, the dressing mechanism 50 can move relative to the grinding wheel T in the first direction D1. The dressing mechanism 50 can apply dressing to the thread of grinding wheel 101 of the grinding wheel T so that the pressure angle changes along the tooth trace direction Ds. As illustrated in FIGS. 6 and 7, the dressing mechanism 50 includes a dressing tool 51A, a tool rotation unit 52, and a tool swivel unit 53.

The dressing tool 51A is formed in a disk shape spreading about the tool rotation axis O5. The tool rotation axis O5 extends along the grinding wheel rotation axis O4. That is, the tool rotation axis O5 is not limited to the case of extending parallel to the grinding wheel rotation axis O4, and may extend so as to intersect to an extent that the tool rotation axis O5 is not orthogonal to the grinding wheel rotation axis O4. The tool rotation axis O5 of the present embodiment extends parallel to the grinding wheel rotation axis O4. The dressing tool 51A is formed in a disc shape in which a through hole is formed at the center and which becomes thinner toward a distal end (outer peripheral end). The dressing tool 51A is fixed to a rotation shaft 54 in a state where the rotation shaft 54 of the tool rotation unit 52, which will be described later, is inserted through the through hole in the center. That is, the dressing tool 51A is disposed so as to spread toward the outer side Dro in a radial direction Dr with respect to the rotation shaft 54. As a result, the dressing tool 51A is rotatably supported around the tool rotation axis O5 integrally with the rotation shaft 54. The dressing tool 51A of the present embodiment integrally includes one dressing portion 510 forming a distal end, and an annular tool body 500 disposed on an inner side Dri in the radial direction Dr with respect to the dressing portion 510. In the dressing portion 510, a pair of dressing surfaces 511 and 512 (a first dressing surface 511 and a second dressing surface 512) is formed on both side surfaces in a rotation axis direction Da that is a direction in which the grinding wheel rotation axis O4 extends. The pair of dressing surfaces 511 and 512 can dress the two grinding surfaces 101A and 101B adjacent to each other in the groove width direction Dw. Note that the rotation axis direction Da is the groove width direction Dw when dressing is applied. The pair of dressing surfaces 511 and 512 of the present embodiment face opposite sides (outer sides) so as not to face each other in the rotation axis direction Da. The pair of dressing surfaces 511 and 512 is formed in a tapered shape such that an interval in the rotation axis direction Da gradually decreases in a cross-sectional view including the tool rotation axis O5 from the inner side Dri toward the outer side Dro in the radial direction Dr. That is, due to the pair of dressing surfaces 511 and 512, a thickness of the dressing portion 510 decreases toward the distal end so as to be away from the rotation shaft 54.

The tool rotation unit 52 includes a motor that rotationally drives the rotation shaft 54 around the tool rotation axis O5. The rotation shaft 54 is formed in a columnar shape centered on the tool rotation axis O5. The tool rotation unit 52 is fixed to the dressing device moving unit 55.

The tool swivel unit 53 turns and drives the dressing tool 51A around the tool rotation axis O5 and the tool turning axis O6 orthogonal to the first direction D1. The tool turning axis O6 of the present embodiment extends in the vertical direction Dv. The tool swivel unit 53 is fixed to the dressing device moving unit 55. As illustrated in FIGS. 7 to 9, the tool swivel unit 53 turns the dressing tool 51A around the tool turning axis O6 together with the tool rotation unit 52. By turning around the tool turning axis O6, the dressing tool 51A is swingable so as to swing the distal end provided with the dressing portion 510 in the rotation axis direction Da (groove width direction Dw). Specifically, the pair of dressing surfaces 511 and 512 is swung so as to rotate from a state in which a tool central axis Ct is orthogonal to the grinding wheel rotation axis O4. The tool central axis Ct is a virtual axis passing through the center of the dressing portion 510 so as to extend at positions equidistant from the pair of dressing surfaces 511 and 512 in the rotation axis direction Da in the cross section including the tool rotation axis O5.

When dressing is applied to the grinding wheel T, the dressing tool 51A is rotationally driven around the tool rotation axis O5 in a state where the dressing portion 510 is inserted into the thread of grinding wheel 101. As a result, the two grinding surfaces 101A and 101B adjacent to each other in the groove width direction Dw in the thread of grinding wheel 101 simultaneously come into contact by the pair of dressing surfaces 511 and 512.

As illustrated in FIG. 1, the control unit 9 controls various mechanisms in the gear grinding machine 1A when processing the workpiece W with the grinding wheel T or dressing the grinding wheel T with the dressing mechanism 50. The control unit 9 of the present embodiment controls operations of the workpiece table 3, the grinding wheel support 4, the dressing device 5A, the tail stock 6, the dressing device moving unit 55, and the tail stock moving unit 65.

### (Hardware configuration diagram)

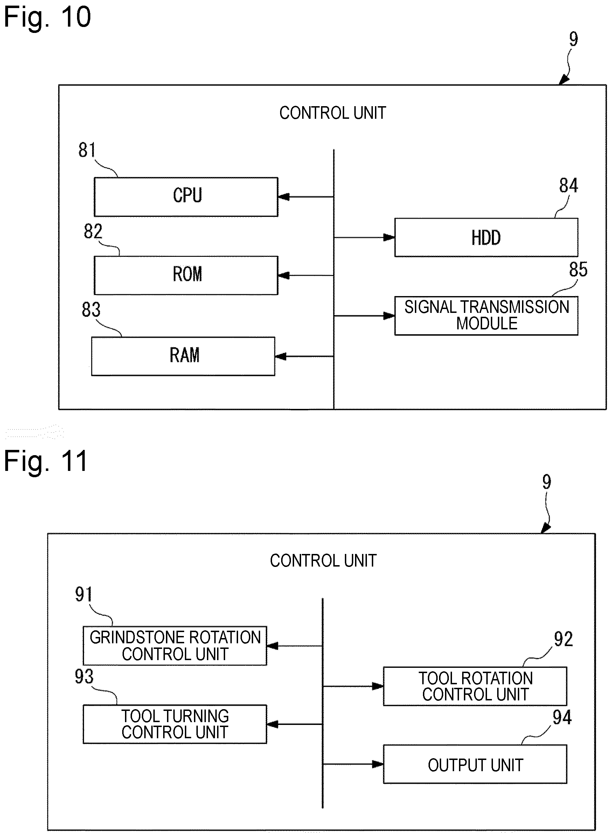

As illustrated in FIG. 10, the control unit 9 is a computer including a central processing unit (CPU) 81, a read only memory (ROM) 82, a random access memory (RAM) 83, a hard disk drive (HDD) 84, and a signal transmission module 85. The signal transmission module 85 transmits a control signal to each unit of the gear grinding machine 1A.

### (Functional block diagram)

As illustrated in FIG. 11, the control unit 9 controls each unit of the gear grinding machine 1A by causing the CPU 81 to execute a program stored in advance in the own device via the ROM 82, the RAM 83, or the HDD 84.

The control unit 9 functions as a part of the dressing device 5A, and controls the operation of other units when dressing is applied to the grinding wheel T. The control unit 9 controls the dressing device moving unit 55 to move the dressing mechanism 50 to the dressing device use position P2 such that the dressing tool 51A comes into contact with the grinding wheel T. The control unit 9 controls at least one of the grinding wheel support body 41 and the dressing device moving unit 55 to move in the first direction D1, and presses the grinding wheel T against the dressing tool 51A. Furthermore, the control unit 9 performs control to rotate the grinding wheel T around the grinding wheel rotation axis O4 and to rotationally drive the dressing tool 51A around the tool rotation axis O5. As a result, the control unit 9 causes the rotating dressing portion 510 to be inserted into the thread of grinding wheel 101 of the rotating grinding wheel T. Thereafter, the control unit 9 simultaneously presses the pair of dressing surfaces 511 and 512 against the grinding surfaces 101A and 101B adjacent to each other in the groove width direction Dw. Accordingly, dressing is simultaneously applied to the two grinding surfaces 101A and 101B by the pair of dressing surfaces 511 and 512. The control unit 9 turns the dressing tool 51A around the tool turning axis O6 while performing dressing along the tooth trace direction Ds of the thread of grinding wheel 101. As a result, the dressing is applied while the angles of the pair of dressing surfaces 511 and 512 with respect to the two grinding surfaces 101A and 101B are changed.

Moreover, when dressing is performed by the dressing tool 51A, the control unit 9 gradually turns the dressing tool 51A around the tool turning axis O6 as approaching the second portion 101t from the first portion 101s of the thread of grinding wheel 101. As a result, dressing in which the pressure angle (angle of the pair of grinding surfaces 101A and 101B with respect to a groove central axis Cm to be described later as illustrated in FIG. 7) gradually changes along the tooth trace direction Ds is applied to the thread of grinding wheel 101.

The control unit 9 of the present embodiment includes each configuration of a grinding wheel control unit 91, a tool rotation control unit 92, a tool turning control unit 93, and an output unit 94 as a configuration for performing dressing.

The grinding wheel control unit 91 controls the grinding wheel support 4. Specifically, the grinding wheel control unit 91 moves the grinding wheel support body 41 and the grinding wheel moving unit 42. Furthermore, the grinding wheel control unit 91 rotates the grinding wheel T around the grinding wheel rotation axis O4 by the grinding wheel drive unit 43. Moreover, the grinding wheel control unit 91 presses the rotating grinding wheel T against the dressing tool 51A. Thereafter, the grinding wheel T is fed in the second direction D2 in a state where the dressing tool 51A is pressed.

The tool rotation control unit 92 controls the tool rotation unit 52. The tool rotation control unit 92 rotationally drives the rotation shaft 54. The tool rotation control unit 92 of the present embodiment rotates the dressing tool 51A at a constant speed around the tool rotation axis O5. Note that the tool rotation control unit 92 may rotate the dressing tool 51A at an arbitrary rotation speed so as to change a rotation speed.

The tool turning control unit 93 controls the tool swivel unit 53. The tool turning control unit 93 causes the tool swivel unit 53 to turn the dressing tool 51A around the tool turning axis O6 by an arbitrary turning amount (rotation angle). In the present embodiment, the tool turning control unit 93 turns the dressing tool 51A by a constant turning amount. Moreover, in the process of applying dressing from the first portion 101s to the second portion 101t of the thread of grinding wheel 101, the tool turning control unit 93 linearly and gradually changes the angles of the first dressing surface 511 with respect to the first grinding surface 101A and the second dressing surface 512 with respect to the second grinding surface 101B.

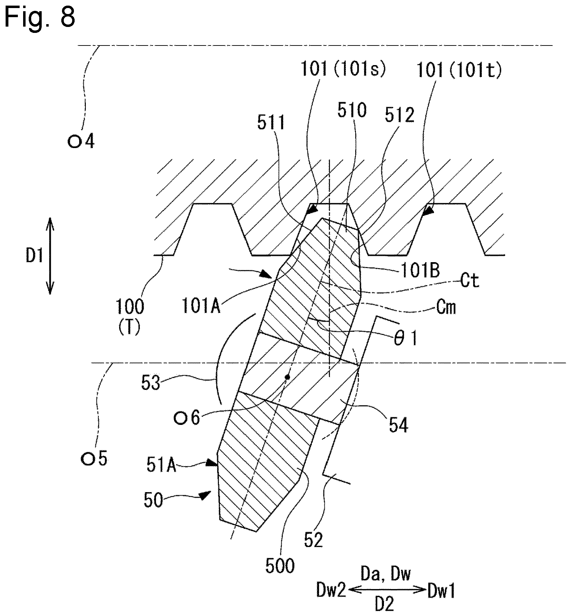

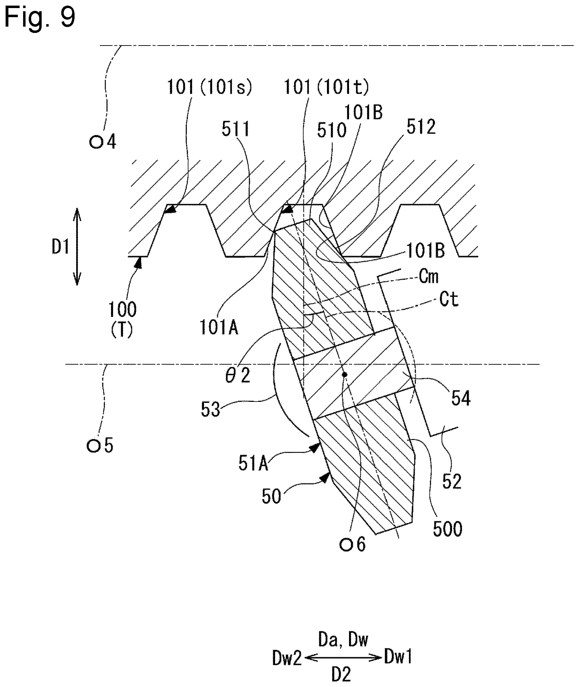

Specifically, as illustrated in FIG. 8, in the first portion 101s, the tool turning control unit 93 inclines the dressing tool 51A such that the angle between the tool central axis Ct and the groove central axis Cm becomes an inclination angle *θ* 1 such that the distal end is located on a first side Dw1 in the groove width direction Dw with respect to the groove central axis Cm. Here, the groove central axis Cm is a virtual axis located in the middle of the thread of grinding wheel in the groove width direction Dw in the cross section including the grinding wheel rotation axis O4. That is, in the cross section including the grinding wheel rotation axis O4, a distance between the groove central axis Cm and the first grinding surface 101A and a distance between the groove central axis Cm and the second grinding surface 101B are equal. As illustrated in FIG. 9, in the second portion 101t, the tool turning control unit 93 inclines the dressing tool 51A such that the angle between the tool central axis Ct and the groove central axis Cm becomes an inclination angle *θ* 2 such that the distal end is located on a second side Dw2 in the groove width direction Dw with respect to the groove central axis Cm. Here, the inclination angle *θ* 1 and the inclination angle *θ* 2 may have the same absolute value or different absolute values. Furthermore, as illustrated in FIG. 7, in an intermediate portion 101c between the first portion 101s and the second portion 101t, the tool turning control unit 93 causes the dressing tool 51A not to be inclined with respect to the groove central axis Cm, and causes the tool central axis Ct and the groove central axis Cm to be in a parallel state (coinciding state).

The output unit 94 outputs a control signal to various devices. The output unit 94 is the signal transmission module 85 in terms of hardware.

### (Procedure of grinding wheel dressing method)

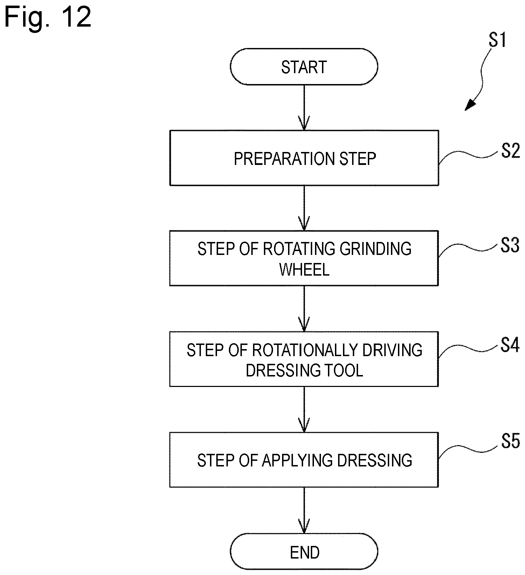

A dressing method S1 for the grinding wheel T is a method of applying dressing to the grinding wheel T for grinding the gear 200. As illustrated in FIG. 12, the dressing method S1 for the grinding wheel T according to the embodiment of the present disclosure includes a preparation step S2, a step S3 of rotating the grinding wheel T, a step S4 of rotationally driving the dressing tool 51A, and a step S5 of applying dressing to the thread of grinding wheel 101 while turning the dressing tool 51A.

In the preparation step S2, the control unit 9 controls the dressing device moving unit 55 to move the dressing device 5A to the dressing device use position P2. Furthermore, if necessary, the control unit 9 controls the dressing device moving unit 55 and the grinding wheel moving unit 42, and the dressing tool 51A and the grinding wheel moving unit 42 adjust the position of the grinding wheel T.

In step S3 of rotating the grinding wheel T, the grinding wheel control unit 91 causes the grinding wheel drive unit 43 to rotationally drive the grinding wheel T around the grinding wheel rotation axis O4.

In step S4 of rotationally driving the dressing tool 51A, the tool rotation control unit 92 rotationally drives the dressing tool 51A around the tool rotation axis O5 together with the rotation shaft 54 in the tool rotation unit 52.

In the step S5 of applying dressing to the thread of grinding wheel 101, first, at least one of the grinding wheel support body 41 and the dressing device moving unit 55 is moved in the first direction D1. As a result, the dressing portion 510 of the rotating dressing tool 51A is inserted into the thread of grinding wheel 101 of the grinding wheel T, and the pair of dressing surfaces 511 and 512 is pressed against the two grinding surfaces 101A and 101B. Thereafter, the grinding wheel T against which the dressing tool 51A is pressed is fed in the second direction D2 in a state of being rotated around the grinding wheel rotation axis O4. In this manner, the grinding wheel T rotates about the grinding wheel rotation axis O4 while the rotating dressing tool 51A is pressed against the thread of grinding wheel 101, whereby dressing is simultaneously and continuously applied to the pair of grinding surfaces 101A and 101B by the pair of dressing surfaces 511 and 512 in the direction in which the thread of grinding wheel 101 extends.

In this step S5, as illustrated in FIGS. 8 and 9, the dressing tool 51A turns around the tool turning axis O6 while simultaneously applying dressing to the pair of grinding surfaces 101A and 101B in the direction in which the thread of grinding wheel 101 extends by the dressing tool 51A.

As a result, the dressing tool 51A turns so as to gradually change the angle of the tool central axis Ct with respect to the groove central axis Cm.

Specifically, for example, the dressing tool 51A is turned by a constant turning amount between the first portion 101s and the second portion 101t spaced apart in the direction in which the thread of grinding wheel 101 extends. That is, the dressing tool 51A is turned so that the turning amount becomes linear. As a result, as illustrated in FIG. 8, in a case where the contact portion between the grinding wheel T and the dressing tool 51A is the first portion 101s, the dressing tool 51A is inclined at the inclination angle *θ* 1 such that the distal end is located on the first side Dw1 in the groove width direction Dw with respect to the groove central axis Cm. As a result, the angle of the first dressing surface 511 with respect to the first grinding surface 101A is widened to be an obtuse angle, and the angle of the second dressing surface 512 with respect to the second grinding surface 101B is narrowed to be an acute angle.

Thereafter, in the intermediate portion 101c where the contact portion between the grinding wheel T and the dressing tool 51A is on the way from the first portion 101s to the second portion 101t, as illustrated in FIG. 7, the dressing tool 51A is in a state where the tool central axis Ct coincides with the groove central axis Cm (a state where the inclination angle is 0° ).

Moreover, thereafter, when the contact portion between the grinding wheel T and the dressing tool 51A advances from the intermediate portion 101c and reaches the second portion 101t, as illustrated in FIG. 9, the dressing tool 51A is inclined at the inclination angle *θ* 2 such that the distal end is located on the second side Dw2 in the groove width direction Dw with respect to the groove central axis Cm. As a result, the angle of the first dressing surface 511 with respect to the first grinding surface 101A is narrowed to be an acute angle, and the angle of the second dressing surface 512 with respect to the second grinding surface 101B is widened to be an obtuse angle.

Note that, in the present embodiment, in the process in which the contact portion between the grinding wheel T and the dressing tool 51A reaches the second portion 1011 from the first portion 101s through the intermediate portion 101c, the dressing tool 51A turns such that the tool central axis Ct with respect to the groove central axis Cm linearly changes.

As described above, the inclination angles *θ* 1 and *θ* 2 when the dressing tool 51A is most inclined around the tool turning axis O6 are preferably set to values suitable for bias correction processing for eliminating, for example, a twist bias) of the tooth surface generated when crowning is applied in the tooth trace direction Ds of the helical gear. Specifically, the twist of the tooth profile generated on the tooth surface when the tooth 201 of the gear 200 is actually ground by the grinding wheel T having the thread of grinding wheel 101 on which the dressing is applied without inclining the dressing tool 51A is measured. On the basis of the measurement result, the inclination angles *θ* 1 and *θ* 2 are set so as to cancel the degree of twist (bias amount) of the tooth surface, which is the deviation of the pressure angle in the tooth trace direction Ds on the tooth surface.

### (Operation and effects)

The dressing device 5A having the above configuration turns the dressing tool 51A around the tool turning axis O6 while simultaneously dressing the two grinding surfaces 101A and 101B adjacent in the groove width direction Dw of the thread of grinding wheel 101 with the pair of dressing surfaces 511 and 512 of the dressing tool 51A. As a result, the contact angles of the pair of dressing surfaces 511 and 512 with respect to the two grinding surfaces 101A and 101B can be simultaneously adjusted. Specifically, the first dressing surface 511 is inclined with respect to the first grinding surface 101A by turning the dressing tool 51A. At the same time, the second dressing surface 512 is inclined with respect to the second grinding surface 101B so as to face a direction opposite to the inclination of the first dressing surface 511 with respect to the first grinding surface 101A. That is, the contact angle of the first dressing surface 511 with respect to the first grinding surface 101A and the contact angle of the second dressing surface 512 with respect to the second grinding surface 101B simultaneously change so that positive and negative values have the same absolute value and are opposite values. Thus, the dressing can be applied so as to simultaneously change the pressure angles of the two grinding surfaces 101A and 101B. As a result, the dressing of the thread of grinding wheel 101 can be efficiently performed when the bias is corrected.

Furthermore, when the dressing is performed, the dressing tool 51A gradually turns as approaching the second portion 101t from the first portion 101s of the thread of grinding wheel 101.

As a result, the pressure angles of the two grinding surfaces 101A and 101B gradually change along the tooth trace direction Ds from the first portion 101s toward the second portion 101t of the thread of grinding wheel 101. Therefore, when the gear 200 is machined by the thread of grinding wheel 101, the pressure angle can be smoothly adjusted from the first portion 101s in contact with the first end 201a on one side in the tooth trace direction Ds of the tooth 201 to the second portion 101t in contact with the second end 201b of the tooth 201.

Furthermore, the dressing tool turns between the first portion 101s and the second portion 101t such that the distal end faces in the groove width direction Dw opposite to the groove central axis Cm. As a result, the pressure angles of the first portion 101s and the second portion 101t can be adjusted in a state where the amount of change in the pressure angle at the intermediate portion 101c between the first portion 101s and the second portion 101t approaches 0. Thus, for example, the pressure angle in the first portion 101s can be gradually changed so as to be larger than the pressure angle in the intermediate portion, and the pressure angle in the second portion 101t can be gradually changed so as to be smaller than the pressure angle in the intermediate portion. Furthermore, conversely, the pressure angle in the first portion 101s can be gradually changed so as to be smaller than the pressure angle in the intermediate portion, and the pressure angle in the second portion 101t can be gradually changed so as to be larger than the pressure angle in the intermediate portion.

When one dressing portion 510 is inserted into the thread of grinding wheel 101 of the grinding wheel T, the pair of dressing surfaces 511 and 512 comes into contact with two adjacent grinding surfaces 101A and 101B in the groove width direction Dw of the thread of grinding wheel 101. As a result, the dressing can be simultaneously applied to both surfaces of the thread of grinding wheel 101 in the groove width direction Dw.

Furthermore, since the gear grinding machine 1A, 1B includes the dressing device 5A as described above, the dressing can be efficiently performed on the grinding wheel T used for grinding the gear 200.

### <Modification of first embodiment>

Note that, in the first embodiment, the dressing tool 51A is formed in a tapered disk shape. That is, in the first embodiment, the dressing tool 51A has a structure in which the pair of dressing surfaces 511 and 512 is formed in one dressing portion 510. However, the shape of the dressing tool is not limited to such a structure.

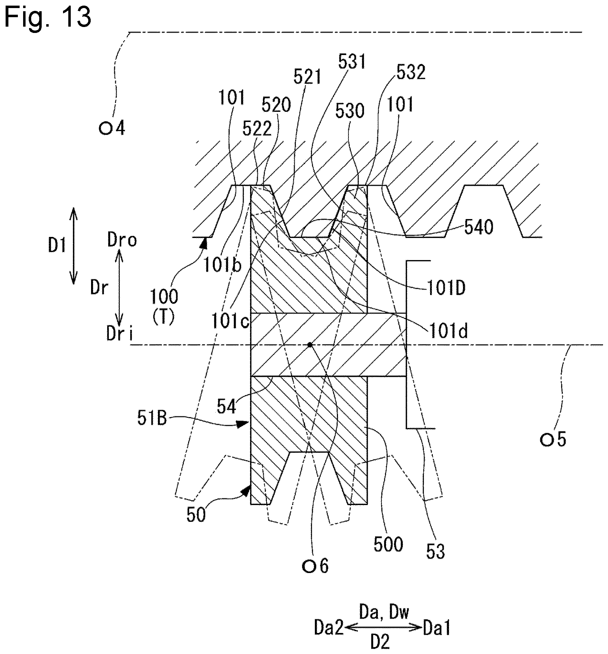

For example, as illustrated in FIG. 13, a dressing tool 51B of the modification is formed in a disk shape in which a recess is formed at an end portion so that the distal end is bifurcated. Specifically, the dressing tool 51B of the modification includes a first dressing portion 520 and a second dressing portion 530.

The first dressing portion 520 extends toward the outer side Dro in the radial direction Dr from the tool body 500. The second dressing portion 530 extends toward the outer side Dro in the radial direction Dr from the tool body 500 at a position away from the first dressing portion 520. The second dressing portion 530 is disposed at a distance from the first dressing portion 520 on a first side Da1 in the rotation axis direction Da. A first dressing surface 521 is formed on the first side Da1 of the first dressing portion 520 in the rotation axis direction Da. A second dressing surface 531 is formed on a second side Da2 of the second dressing portion 530 in the rotation axis direction Da.

The first dressing surface 521 polishes a first grinding surface 101C on the first side Da1 of the thread of grinding wheel 101 in the rotation axis direction Da. The second dressing surface 531 polishes a second grinding surface 101D on the second side Da2 in the rotation axis direction Da of the adjacent thread of grinding wheel 101 disposed on the first side Da1 in the rotation axis direction Da with respect to the thread of grinding wheel 101 including the first grinding surface 101C. That is, the first dressing surface 521 and the second dressing surface 531 do not simultaneously process both surfaces of one thread of grinding wheel 101, but simultaneously process pieces of two adjacent thread of grinding wheels 101. In this manner, the first dressing surface 521 and the second dressing surface 531 can be simultaneously dressed with respect to the two grinding surfaces 101C and 101D adjacent in the groove width direction Dw. As a result, the dressing tool 51A of the first embodiment performs dressing on the grinding wheel T in a state where the dressing portion 510 is inserted into the thread of grinding wheel 101, but the dressing tool 51B of the modification performs dressing on the grinding wheel T in a state where a protrusion between two adjacent thread of grinding wheels 101 is sandwiched by the first dressing portion 520 and the second dressing portion 530.

Furthermore, the dressing tool 51B is formed such that the first dressing portion 520 and the second dressing portion 530 are fitted to the protrusion formed between two adjacent thread of grinding wheels 101. That is, a distal end surface 522 of the first dressing portion 520 and a distal end surface 532 of the second dressing portion 530 can polish a groove bottom surface 101b of the thread of grinding wheel 101. A basal surface 540 between the first dressing portion 520 and the second dressing portion 530 can polish a tooth distal end surface 101d of the thread of grinding wheel 101.

### (Operation and effects)

Also in such a dressing tool 51B, similarly to the above embodiment, the dressing tool 51B is turned around the tool turning axis O6 while simultaneously dressing the two grinding surfaces 101C and 101D adjacent in the groove width direction Dw in the protrusion forming the thread of grinding wheel 101 with the pair of dressing surfaces 521 and 531 of the dressing tool 51B. Thus, the contact angles of the pair of dressing surfaces 521 and 531 with respect to the two grinding surfaces 101C and 101D can be simultaneously adjusted.

Furthermore, in the dressing tool 51B, the groove bottom surface 101b and the tooth distal end surface 101d of the thread of grinding wheel 101 can be simultaneously dressed by the distal end surfaces 522 and 532 and the basal surface 540. That is, the thread of grinding wheel 101 can be processed with many contact surfaces like surface contact by the first dressing portion 520 and the second dressing portion 530 having shapes matching the thread of grinding wheel 101. As a result, the dressing time of the thread of grinding wheel 101 can be shortened and more efficiently performed.

### (Second embodiment)

Next, a second embodiment of the dressing device and the gear grinding machine according to the present disclosure will be described. Note that, in the second embodiment described below, the same reference signs are given to the same configurations as those of the first embodiment in the drawings, and the description thereof will be omitted. The second embodiment is different from the first embodiment in that the lead of the thread of grinding wheel 101 of the grinding wheel T is changed.

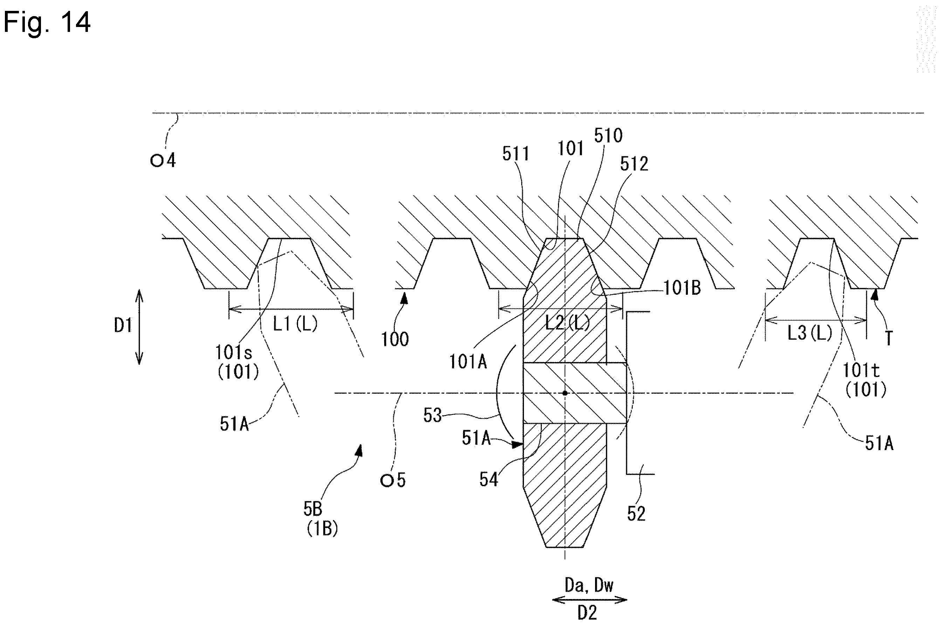

As illustrated in FIG. 14, in the dressing device 5B and the gear grinding machine 1B of the present embodiment, a lead dimension L of a thread of grinding wheel 101 in a spiral shape is non-uniform in the rotation axis direction Da. The lead dimension L is a length of the thread of grinding wheel 101 in the groove width direction Dw when a grinding wheel T rotates a predetermined number of times. Specifically, when the grinding wheel T is a single-start grinding wheel, the length is a length in the groove width direction Dw in the cross section including the grinding wheel rotation axis O4 between the start point and the end point of the thread of grinding wheel 101 when the grinding wheel T makes one turn. Furthermore, when the grinding wheel T is a double-start grinding wheel, the length of the grinding wheel T is a length in the groove width direction Dw in a cross section including the grinding wheel rotation axis O4 between the start point and the end point, the grinding wheel T making one turn and sandwiching one thread of grinding wheel 101.

In the present embodiment, the lead dimension L of the thread of grinding wheel 101 is not constant but gradually changes from a first portion 101s toward a second portion 101t of the thread of grinding wheel 101. For example, the lead dimension L of the thread of grinding wheel 101 is set to 11, which is the largest on one side in the groove width direction Dw, and gradually decreases to L2 and L3 toward the other side in the groove width direction Dw. At this time, the lead dimension L preferably changes linearly.

In order to change the lead dimension L, for example, there is a method in which the moving speed of the grinding wheel T in the second direction D2 by a grinding wheel drive unit 43 is made constant, and the rotational speed of a dressing tool 51A by a tool rotation unit 52 is changed.

When the lead dimension L is gradually reduced from one side to the other side in the groove width direction Dw, the pressure angle of the thread of grinding wheel 101 gradually increases from one side to the other side in the groove width direction Dw. Note that the method of changing the lead dimension L is not limited to such a method. That is, as long as the lead dimension L can be changed, the grinding wheel T and the dressing tool 51A may be moved and rotated under any conditions.

### (Operation and effects)

When a pair of dressing surfaces 511 and 512 are simultaneously brought into contact with two grinding surfaces 101A and 101B to perform the dressin processing in a state where the lead dimension L of the thread of grinding wheel 101 is changed, the contact angle of the pair of dressing surfaces 511 and 512 with respect to the two grinding surfaces 101A and 101B can be simultaneously adjusted. Specifically, due to the change in the lead dimension L of the thread of grinding wheel 101, the position (depth) where the first dressing surface 511 is in contact with the first grinding surface 101A and the position (depth) where the second dressing surface 512 is in contact with the second grinding surface 101B are shifted in the same direction by the same amount in the groove width direction Dw. As a result, the contact angle of the first dressing surface 511 with respect to the first grinding surface 101A and the contact angle of the second dressing surface 512 with respect to the second grinding surface 101B are simultaneously changed so as to have the same absolute value and the same positive and negative values. As a result, the dressing can be applied by simultaneously changing the pressure angles of the two grinding surfaces 101A and 101B in the same direction by the same amount. Therefore, by changing the lead dimension L while turning the dressing tool 51A, the dressing can be performed so that the pressure angles of the two grinding surfaces 101A and 101B are changed while being finely adjusted at the same time. As a result, the dressing of the thread of grinding wheel 101 can be more efficiently performed when the bias is corrected.

Furthermore, in addition to the adjustment of the pressure angle by turning the dressing tool 51A by changing the lead dimension L from the first portion 101s toward the second portion 101t in the tooth trace direction Ds, the pressure angle can be further finely adjusted in the tooth trace direction Ds by changing the lead dimension L. As a result, even when the degree of change in the pressure angle from the first portion 101s toward the second portion 101t is different between the grinding surface 101A on one side and the grinding surface 101B on the other side in the groove width direction Dw, the pressure angle can be appropriately adjusted.

Although the embodiments of the present invention have been described in detail with reference to the drawings, the configurations and combinations thereof in the embodiments are merely examples, and additions, omissions, substitutions, and other modifications of the configurations can be made without departing from the spirit of the present invention. Furthermore, the present invention is not limited by the embodiments, but is limited only by the claims.

### <Supplementary notes>

The dressing device 5A, 5B, the gear grinding machine 1A, 1B, and the dressing method S1 for the grinding wheel T described in each embodiment are grasped as follows, for example.

(1) The dressing device 5A, 5B according to the first aspect includes: a dressing mechanism 50 that is relatively movable in a first direction D1 orthogonal to a grinding wheel rotation axis O4 and is capable of dressing a thread of grinding wheel 101, with respect to a grinding wheel T including thread of grinding wheel 101 spirally continuous around the grinding wheel rotation axis O4; and a control unit 9 that controls an operation of the dressing mechanism 50, in which the dressing mechanism 50 includes: a disk-shaped dressing tool 51A, 51B that is rotationally driven around a tool rotation axis O5 extending along the grinding wheel rotation axis O4 and includes, at a distal end, a pair of dressing surfaces 511, 512, 521, 531 capable of dressing with respect to two grinding surfaces 101A, 101B, 101C, 101D that are surfaces constituting the thread of grinding wheel 101 and adjacent in a groove width direction Dw; and a tool swivel unit 53 that turns the dressing tool 51A, 51B around a tool turning axis O6 orthogonal to the tool rotation axis O5 and the first direction D1, and the control unit 9 rotates the grinding wheel T around the grinding wheel rotation axis O4 and rotates the dressing tool 51A, 51B around the tool rotation axis O5 to dress the two grinding surfaces 101A, 101B, 101C, 101D adjacent in the groove width direction Dw with the pair of dressing surfaces 511, 512, 521, 531 of the dressing tool 51A, 51B, and turns the dressing tool 51A, 51B around the tool turning axis O6 by the tool swivel unit 53 to thereby change an angle of the pair of dressing surfaces 511, 512, 521, 531 with respect to the two grinding surfaces 101A, 101B, 101C, 101D.
   The angles at which the pair of dressing surfaces 511 and 512 come into contact with the two grinding surfaces 101A and 101B can be simultaneously adjusted. Specifically, when the dressing tool 51A is turned, the one dressing surface 511 is inclined with respect to the one grinding surface 101A. At the same time, the other dressing surface 512 is inclined with respect to the other grinding surface 101B so as to face opposite to the inclination of the one dressing surface 511 with respect to the one grinding surface 101A. That is, the angle at which the one dressing surface 511 comes into contact with the one grinding surface 101A and the angle at which the other dressing surface 512 comes into contact with the other grinding surface 101B simultaneously change so that positive and negative values have the same absolute value and are opposite values. Thus, the dressing can be applied so as to simultaneously change the pressure angles of the two grinding surfaces 101A and 101B. As a result, the dressing of the thread of grinding wheel 101 can be efficiently performed when the bias is corrected.
(2) The dressing device 5A, 5B according to the second aspect is the dressing device 5A, 5B of (1), in which in a case where one tooth 201 of a gear 200 is ground, the thread of grinding wheel 101 in a spiral shape includes a first portion 101s that is in contact with a first end 201a on one side of the tooth 201 in a tooth trace direction Ds of the tooth 201 and a second portion 1011 that is in contact with a second end 201b on an other side of the tooth 201 in the tooth trace direction Ds, and when performing dressing, the control unit 9 gradually turns the dressing tool 51A, 51B as approaching the second portion 101t from the first portion 101s.
   As a result, the pressure angles of the two grinding surfaces 101A and 101B gradually change along the tooth trace direction Ds from the first portion 101s toward the second portion 101t of the thread of grinding wheel 101. Therefore, when the gear 200 is machined by the thread of grinding wheel 101, the pressure angle can be smoothly adjusted from the first portion 101s in contact with the first end 201a on one side in the tooth trace direction Ds of the tooth 201 to the second portion 101t in contact with the second end 201b of the tooth 201.
(3) The dressing device 5A, 5B according to the third aspect is the dressing device 5A, 5B of (2), in which in a cross section including the grinding wheel rotation axis O4, in the first portion 101s, the control unit 9 inclines the dressing tool 51A, 51B such that the distal end is located on a first side Dw1 in the groove width direction Dw with respect to a groove central axis Cm located in a middle of the thread of grinding wheel 101 in the groove width direction Dw, and in the cross section including the grinding wheel rotation axis O4, in the second portion 101t, the control unit 9 inclines the dressing tool 51A, 51B such that the distal end is located on a second side Dw2 in the groove width direction Dw with respect to the groove central axis Cm.
   As a result, the pressure angles of the first portion 101s and the second portion 101t can be adjusted in a state where an amount of change in the pressure angle between the first portion 101s and the second portion 101t approaches 0.
(4) A dressing device 5A, 5B according to a fourth aspect is the dressing device 5A according to any one of (1) to (3), in which the dressing tool 51A includes one dressing portion 510, and the pair of dressing surfaces 511, 512 are formed on side surfaces of the dressing portion 510 and facing opposite sides in a direction in which the tool rotation axis O5 extends.
   As a result, when the dressing portion 510 is inserted into the thread of grinding wheel 101 of the grinding wheel T, the pair of dressing surfaces 511 and 512 comes into contact with the two adjacent grinding surfaces 101A and 101B in the groove width direction Dw of the thread of grinding wheel 101. As a result, the dressing can be simultaneously applied to both surfaces of the thread of grinding wheel 101 in the groove width direction Dw.
(5) A dressing device 5A, 5B according to a fifth aspect is the dressing device 5A, 5B according to any one of (1) to (3), in which the dressing tool 51B includes, at the distal end, a first dressing portion 520 and a second dressing portion 530 disposed at a distance from the first dressing portion 520 in a direction in which the tool rotation axis O5 extends, and the dressing surface 521 formed in the first dressing portion 520 and the dressing surface 531 formed in the second dressing portion 530 face each other in the direction in which the tool rotation axis O5 extends.
(6) A dressing device 5B according to a sixth aspect is the dressing device 5B according to any one of (1) to (5), in which the thread of grinding wheel 101 in a spiral shape has a non-uniform lead dimension L that is a length in a direction in which the grinding wheel rotation axis O4 extends when the grinding wheel T rotates a predetermined number of times, and when performing dressing, the control unit 9 adjusts a turning amount of the dressing tool 51B to make the turning amount be corresponding to a change amount of the lead dimension L.
   Thus, by changing the lead dimension L while turning the dressing tool 51A, dressing can be performed so as to change the pressure angles of the two grinding surfaces 101A and 101B simultaneously while finely adjusting the pressure angles. As a result, the dressing of the thread of grinding wheel 101 can be more efficiently performed when the bias is corrected.
(7) A gear grinding machine 1A, 1B according to a seventh aspect includes a workpiece table 3 that rotatably supports a workpiece W serving as a gear 200, a grinding wheel T that grinds the workpiece W, a grinding wheel support 4 that rotationally drives the grinding wheel T around the grinding wheel rotation axis O4, and the dressing device 5A, 5B according to any one of (1) to (6).
   As a result, in the gear grinding machine 1A, 1B, dressing can be efficiently performed on the grinding wheel T used for grinding the gear 200.
(8) A dressing method S1 for a grinding wheel T according to a tenth aspect is a dressing method S1 for a grinding wheel T in the dressing device 5A, 5B according to any one of (1) to (6), the dressing method including: a step S3 of rotating the grinding wheel T around the grinding wheel rotation axis O4; a step S5 of changing an angle of the pair of dressing surfaces 511, 512 with respect to the two grinding surfaces 101A, 101B by dressing the two grinding surfaces 101A, 101B adjacent in the groove width direction Dw with the pair of dressing surfaces 511, 512 and turning the dressing tool 51A, 51B around the tool turning axis O6 by the tool swivel unit 53.

Thus, the dressing can be applied so as to simultaneously change the pressure angles of the two grinding surfaces 101A and 101B. As a result, the dressing of the thread of grinding wheel 101 can be efficiently performed when the bias is corrected.

### INDUSTRIAL APPLICABILITY

According to the dressing device, the gear grinding machine, and the dressing method for a grinding wheel, the dressing can be efficiently performed even in a grinding wheel including a grinding surface having a complicated shape.

### REFERENCE SIGNS LIST

- 1A, 1B: gear grinding machine
- 2: bed
- 3: workpiece table
- 4: grinding wheel support
- 5A, 5B: dressing device
- 6: tail stock
- 7: tail stock support
- 8: workpiece turning conveyance unit
- 9: control unit
- 41: grinding wheel support body
- 42: grinding wheel moving unit
- 43: grinding wheel drive unit
- 50: dressing mechanism
- 51A, 51B: dressing tool
- 52: tool rotation unit
- 53: tool swivel unit
- 54: rotation shaft
- 55: dressing device moving unit
- 65: tail stock moving unit
- 71: support body
- 75: first guide rail
- 76: second guide rail
- 81: CPU
- 82: ROM
- 83: RAM
- 84: HDD
- 85: signal transmission module
- 91: grinding wheel control unit
- 92: tool rotation control unit
- 93: tool turning control unit
- 94: output unit
- 100: grinding teeth
- 101: thread of grinding wheel
- 101A: grinding surface (first grinding surface)
- 101B: grinding surface (second grinding surface)
- 101C: grinding surface (first grinding surface)
- 101D: grinding surface (second grinding surface)
- 101b: groove bottom surface
- 101c: intermediate portion
- 101d: tooth distal end surface
- 101s: first portion
- 101t: second portion
- 200: gear
- 201: teeth
- 201a: first end
- 201b: second end
- 500: tool body
- 510: dressing portion
- 511, 521: dressing surface (first dressing surface)
- 512,531: dressing surface (second dressing surface)
- 520: first dressing portion
- 522: distal end surface
- 530: second dressing portion
- 532: distal end surface
- 540: basal surface
- Cm: groove central axis
- Ct: tool central axis
- D1: first direction
- D2: second direction
- Da: rotation axis direction
- Da1: first side
- Da2: second side
- Dg: tooth profile direction
- Dr: radial direction
- Dri: inner side
- Dro: outer side
- Ds: tooth trace direction
- Dv: vertical direction
- Dw: groove width direction
- Dw1: first side
- Dw2: second side
- L: lead dimension
- O3: table axis
- O4: grinding wheel rotation axis
- O5: tool rotation axis
- O6: tool turning axis
- P1: dressing device standby position
- P2: dressing device use position
- S1: dressing method
- S2: preparation step
- S3: step of rotating grinding wheel
- S4: step of rotationally driving dressing tool
- S5: step of applying dressing
- T: grinding wheel
- W: workpiece
- *θ* 1, *θ* 2: inclination angle

## Claims

1. A dressing device comprising:
a dressing mechanism that is relatively movable in a first direction orthogonal to a grinding wheel rotation axis and is capable of dressing a thread of grinding wheel, with respect to a grinding wheel including the thread of grinding wheel spirally continuous around the grinding wheel rotation axis; and
a control unit that controls an operation of the dressing mechanism,
wherein the dressing mechanism includes:
a disk-shaped dressing tool that is rotationally driven around a tool rotation axis extending along the grinding wheel rotation axis and includes, at a distal end, a pair of dressing surfaces capable of dressing with respect to two grinding surfaces that are surfaces constituting the thread of grinding wheel and adjacent in a groove width direction; and
a tool swivel unit that turns the dressing tool around a tool turning axis orthogonal to the tool rotation axis and the first direction, and
the control unit rotates the grinding wheel around the grinding wheel rotation axis and rotates the dressing tool around the tool rotation axis to dress the two grinding surfaces adjacent in the groove width direction with the pair of dressing surfaces, and turns the dressing tool around the tool turning axis by the tool swivel unit to thereby change an angle of the pair of dressing surfaces with respect to the two grinding surfaces.

2. The dressing device according to claim 1,
wherein in a case where one tooth of a gear is ground, the thread of grinding wheel in a spiral shape includes a first portion that is in contact with a first end on one side of the tooth in a tooth trace direction of the tooth and a second portion that is in contact with a second end on an other side of the tooth in the tooth trace direction, and
when performing dressing, the control unit gradually turns the dressing tool as approaching the second portion from the first portion.

3. The dressing device according to claim 2,
wherein in a cross section including the grinding wheel rotation axis, in the first portion,
the control unit inclines the dressing tool such that the distal end is located on a first side in the groove width direction with respect to a groove central axis located in a middle of the thread of grinding wheel in the groove width direction, and
in the cross section including the grinding wheel rotation axis, in the second portion, the control unit inclines the dressing tool such that the distal end is located on a second side in the groove width direction with respect to the groove central axis.

4. The dressing device according to any one of claims 1 to 3,
wherein the dressing tool includes one dressing portion at the distal end, and the pair of dressing surfaces are formed on side surfaces of the dressing portion and facing opposite sides in a direction in which the tool rotation axis extends.

5. The dressing device according to any one of claims 1 to 3,
wherein the dressing tool includes, at the distal end, a first dressing portion and a second dressing portion disposed at a distance from the first dressing portion in a direction in which the tool rotation axis extends, and
the dressing surface formed in the first dressing portion and the dressing surface formed in the second dressing portion face each other in the direction in which the tool rotation axis extends.

6. The dressing device according to any one of claims 1 to 5,
wherein, the thread of grinding wheel in a spiral shape has a non-uniform lead dimension that is a length in a direction in which the grinding wheel rotation axis extends when the grinding wheel rotates a predetermined number of times, and
when performing dressing, the control unit adjusts a turning amount of the dressing tool to make the turning amount be corresponding to a change amount of the lead dimension.

7. A gear grinding machine comprising:
a workpiece table that rotatably supports a workpiece serving as a gear;
a grinding wheel that grinds the workpiece;
a grinding wheel support that rotationally drives the grinding wheel around a grinding wheel rotation axis; and
the dressing device according to any one of claims 1 to 6.

8. A dressing method for a grinding wheel in the dressing device according to any one of claims 1 to 6,
the dressing method comprising the steps of:
rotating the grinding wheel around the grinding wheel rotation axis;
rotationally driving the dressing tool around the tool rotation axis; and
dressing the two grinding surfaces adjacent in the groove width direction with the pair of dressing surfaces, and turning the dressing tool around the tool turning axis by the tool swivel unit to thereby change an angle of the pair of dressing surfaces with respect to the two grinding surfaces.
